# EUROPÄISCHE PATENTSCHRIFT

(11) **EP 2 532 458 B1**
(45) Veröffentlichungstag und Bekanntmachung des Hinweises auf die Patenterteilung: **29.03.2017**
(21) Anmeldenummer: 11168763.8
(22) Anmeldetag: 06.06.2011
(51) Int. Cl.: B23B 5/16, B24B 9/00

(54) **Gewindestangenentgrater**
Threaded bar deburrer
Dispositif d'ébavurage de tiges de filetage

(43) Veröffentlichungstag der Anmeldung: 12.12.2012
(73) Patentinhaber: HILTI Aktiengesellschaft, 9494 Schaan (LI)
(72) Erfinder: Merhar, Thomas, 9494 Schaan (LI)
(74) Vertreter: Hilti Aktiengesellschaft Corporate Intellectual Property

(56) Entgegenhaltungen:
- EP-A1- 2 082 833
- FR-A1- 2 294 008
- JP-A- 8 001 491

## Beschreibung

Die vorliegende Erfindung betrifft eine Entgratungsvorrichtung gemäß Anspruch 1 und ein Verfahren zum Entgraten eines stangenförmigen Elementes gemäß Anspruch 8.

In der Installationstechnik werden stangenförmige Elemente, wie z. B. Gewindestangen, zum Abhängen und Fixieren von Leitungen, wie beispielsweise Rohrleitungen für Sanitär-, Lüftungs- oder Heizungsinstallationen, verwendet. Die stangenförmigen Elemente werden dabei oftmals von Elementen mit Standardlängen auf die passende Länge zugeschnitten. Dabei entstehen an der Schnittstelle beziehungsweise am entsprechenden Ende Brauen und Grate, welche die Montage des stangenförmigen Elementes an einem Befestigungspunkt, insbesondere einer abgelängten Gewindestange, z. B. in einer Schienenmutter, erschweren oder gar verunmöglichen.

Auch im Leitungsbau werden rohrförmige Elemente von Elementen mit Standardlängen auf die passende Länge, z. B. auf einer Baustelle, zugeschnitten. Hierbei können Brauen und Grate an der Schnittstelle beziehungsweise am entsprechenden Ende ebenfalls eine Kupplung von abgelängten Elementen erschweren oder gar verunmöglichen. Oftmals werden die Enden der stangenförmigen Elemente mit Hilfe einer handelsüblichen Feile entgratet. Dieser Entgratungsvorgang ist aufwendig und erfordert ein gewisses handwerkliches Geschick.

Aus der DE 200 22 301 U1 ist eine Entgratungsvorrichtung zur Bearbeitung eines Endes eines stangenförmigen Elementes mit einem Grundkörper bekannt, der sich entlang einer Rotationsachse erstreckt, und ein erstes Ende und ein dem ersten Ende gegenüberliegendes zweites Ende aufweist. An dem ersten Ende ist eine sich konisch verjüngende, in Richtung des zweiten Endes verlaufende Aufnahme für das stangenförmige Element vorgesehen. In der kegelstumpfförmigen Aufnahme ist ein parallel zur Kegelmantelfläche verlaufendes, in die Aufnahme hineinragendes Messer als Entgratungseinrichtung vorgesehen. Die Entgratungsvorrichtung weist am zweiten Ende des Grundkörpers einen abragenden Stift als Drehmitnahmemittel zur Kupplung mit einer Antriebseinrichtung für einen maschinellen Antrieb der Entgratungsvorrichtung auf.

Die EP 2 082 833 A1 zeigt eine Entgratungsvorrichtung zur Bearbeitung eines Endes eines stangenförmigen Elementes mit einem Grundkörper, der sich entlang einer Rotationsachse erstreckt, und ein erstes Ende und ein dem ersten Ende gegenüberliegendes zweites Ende aufweist, wobei an dem ersten Ende eine Aufnahme für das stangenförmige Element und in der Aufnahme eine erste Entgratungseinrichtung vorgesehen ist, wobei die erste Entgratungseinrichtung eine dem ersten Ende zugewandte Schleiffläche aufweist sowie in der Aufnahme zwischen der ersten Entgratungseinrichtung und dem ersten Ende ein erster zylindrischer Führungsabschnitt vorgesehen ist.

Eine weitere Entgratungsvorrichtung gemäß dem Oberbegriff des Anspruchs 1 ist aus der nächstkommenden JP 8 001 491 A bekannt. Die dort beschriebene Vorrichtung weist einen konischen Innenbereich aus, an dem Sandpapier angebracht ist.

Die Aufgabe der vorliegenden Erfindung besteht darin, eine Entgratungsvorrichtung und ein Verfahren zum Entgraten eines stangenförmigen Elementes zur Verfügung zu stellen, die auch bei einem großen Durchmesser des stangenförmigen Elementes eine gleichmäßige Entgratung gewährleisten.

Diese Aufgabe wird gelöst mit einer Entgratungsvorrichtung zur Bearbeitung eines Endes eines stangenförmigen Elementes, insbesondere einer Gewindestange, mit einer Rotationsachse und mit einem Grundkörper mit einem ersten Ende und einem dem ersten Ende gegenüberliegenden zweiten Ende, wobei an dem ersten Ende des Grundkörpers eine Aufnahme für das stangenförmige Element ausgebildet ist, wobei die Aufnahme einen Entgratungsabschnitt aufweist, und wobei zwischen dem Entgratungsabschnitt und dem ersten Ende an der Aufnahme ein konisch, insbesondere kegelförmig, ausgebildeter Führungsabschnitt ausgebildet ist, wobei die Entgratungsvorrichtung dadurch gekennzeichnet ist, dass an dem ersten Ende ein in den Führungsabschnitt mündender abgerundeter Einführabschnitt ausgebildet ist und/oder das erste Ende des Grundkörpers in einem Schnitt parallel zu der Rotationsachse konvex ausgebildet ist. Der konische Führungsabschnitt lässt eine taumelnde Rotation des stangenförmigen Elementes zu, auch wenn der Durchmesser des stangenförmigen Elementes im Wesentlichen dem maximalen Durchmesser des Entgratungsabschnittes am Führungsabschnitt entspricht. Dies führt zu verbesserten Abtragungsergebnissen und damit zu einem gleichmäßigen und einem symmetrischen Abtragungsbild bzw. Abtragungsstruktur.

Vorzugsweise nimmt der Durchmesser des Führungsabschnittes, insbesondere stetig, in Richtung von dem zweiten Ende zu dem ersten Ende zu. Hierdurch kann eine besonders gleichmäßige Führung des Elementes gewährleistet werden und ein am Element angeordnetes Gewinde geschont werden.

In einer weiteren Ausgestaltung liegt ein Neigungswinkel zwischen dem Führungsabschnitt und der Rotationsachse zwischen 1° und 30°, vorzugsweise zwischen 3° und 20°, insbesondere zwischen 5° und 10°.

In einer ergänzenden Ausführungsform ist der Entgratungsabschnitt konisch, insbesondere kegelförmig, ausgebildet.

Vorzugsweise liegt ein Öffnungswinkel zwischen zwei Schenkeln des Entgratungsabschnittes zwischen 10° und 90°, vorzugsweise zwischen 30° und 85°, insbesondere zwischen 60° und 80°. Ein großer Öffnungswinkel des Entgratungsabschnittes, beispielsweise zwischen 60° und 80°, führt dazu, dass die Kräfte zwischen dem stangenförmigen Element und dem Entgratungsabschnitt im Wesentlichen in Richtung der Rotationsachse auf das stangenförmige Element aufgebracht werden. Dadurch werden Gewindegänge an der radialen Außenseite des stangenförmigen Elementes geschont und es wird im Wesentlichen nur eine Entgratung am axialen Ende des stangenförmigen Elementes ausgeführt.

Bei der erfindungsgemässen Vorrichtung ist an dem ersten Ende ein in den Führungsabschnitt mündender abgerundeter Einführabschnitt ausgebildet und/oder das erste Ende des Grundkörpers ist in einem Schnitt parallel zu der Rotationsachse konvex ausgebildet. Mit Hilfe des Führungsabschnittes am ersten Ende des Grundkörpers kann das stangenförmige Elementes auch bei geringfügigen Abweichungen bezüglich der Rotations- bzw. Symmetrieachse der Aufnahme zuverlässig in die Aufnahme eingeführt werden, weil das Element beim Auftreffen auf den Führungsabschnitt in die Aufnahme eingeleitet wird.

Zweckmäßig umfasst die Entgratungsvorrichtung eine Halteeinrichtung, vorzugsweise zur Befestigung an einer Bohrmaschine oder einem Elektroschrauber, und die Halteeinrichtung ist insbesondere als ein Mehrkant ausgebildet und/oder die Oberfläche des Entgratungsabschnitt ist mit Metallkörnern, vorzugsweise mit einem Durchmesser zwischen 0,1 und 1 mm, insbesondere zwischen 0,3 und 0,5 mm, versehen. Die Halteeinrichtung, die beispielsweise als Mehrkant ausgebildet ist, kann vorzugsweise in ein Bohrfutter der Bohrmaschine oder des Elektroschraubers eingeschoben und an diesem befestigt werden, damit die Entgratungsvorrichtung in eine Rotationsbewegung um die Rotationsachse versetzbar ist.

Die Erfindung umfasst auch ein Verfahren zum Entgraten eines stangenförmigen Elementes mit einer Entgratungsvorrichtung, insbesondere mit einer in dieser Schutzrechtsanmeldung beschriebenen Entgratungsvorrichtung, mit den Schritten: Rotieren der Entgratungsvorrichtung um eine Rotationsachse, Einführen des stangenförmigen Elementes in eine Aufnahme der Entgratungsvorrichtung, Kontaktieren eines Endes des stangenförmigen Elementes mit einem Entgratungsabschnitt an der Aufnahme, so dass das stangenförmigen Element entgratet wird und/oder eine Fase eingearbeitet wird, wobei von dem stangenförmigen Element während des Entgratens eine taumelnde Bewegung ausgeführt wird, welche von einem Führungsabschnitt der Entgratungsvorrichtung begrenzt wird.

In einer bevorzugten Ausführungsform entspricht der Durchmesser des stangenförmigen Elementes, insbesondere an dem in die Aufnahme eingeführten Ende, dem maximalen Durchmesser des Entgratungsabschnittes, oder der Durchmesser des stangenförmigen Elementes, insbesondere an dem in die Aufnahme eingeführten Ende, ist um weniger als 20%, 10%, 5% oder 2% kleiner als der maximale Durchmesser des Entgratungsabschnittes.

Beim erfindungsgemässen Verfahren wird die taumelnde Bewegung von einem Führungsabschnitt der Entgratungsvorrichtung begrenzt. Die taumelnde Bewegung bewegt sich vorzugsweise innerhalb eines fiktiven Kegels mit einem Öffnungswinkel zwischen 2° und 60°, vorzugsweise zwischen 6° und 40°, insbesondere zwischen 10° und 20°.

In einer weiteren Variante ist die Entgratungsvorrichtung, insbesondere die Aufnahme, z. B. der Entgratungsabschnitt und/oder der Führungsabschnitt und/oder der Einführabschnitt, und/oder der Grundkörper und/oder die Halteeinrichtung, rotationssymmetrisch zu der Rotationsachse ausgebildet.

Zweckmäßig besteht die Entgratungsvorrichtung, insbesondere der Grundkörper und/oder die Halteeinrichtung, wenigstens teilweise, insbesondere vollständig, aus Metall, z. B. Stahl.

Im Nachfolgenden wird ein Ausführungsbeispiel der Erfindung unter Bezugnahme auf die beigefügten Zeichnungen näher beschrieben. Es zeigen:

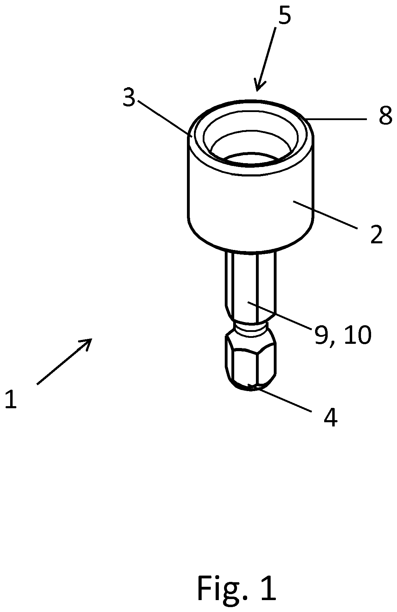

- Fig. 1: eine perspektivische Ansicht der Entgratungsvorrichtung und

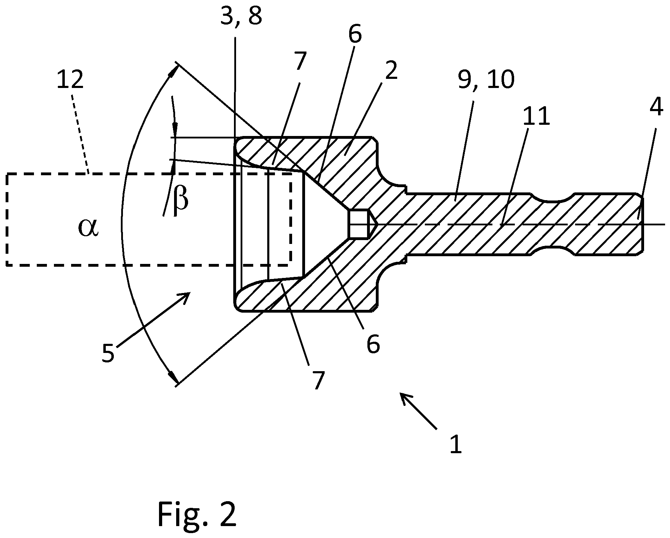

- Fig. 2: einen Längsschnitt der Entgratungsvorrichtung gemäß Fig. 1.

Eine Entgratungsvorrichtung 1 wird dazu eingesetzt, um stangenförmige Elemente 12 als Gewindestangen nach dem Abschneiden auf eine passende Länge an der Schnittstelle zu entgraten. Hierzu ist die Entgratungsvorrichtung 1, welche einteilig mit einem Grundkörper 2 und einer Halteeinrichtung 9 mit Mehrkant 10 ausgebildet ist, mit dem Mehrkant 10 in einem Bohrfutter einer nicht dargestellten Bohrmaschine zu befestigen und anschließend in eine Rotationsbewegung um eine Rotationsachse 11 zu versetzen. Der Mehrkant 10 kann beispielsweise ein Standard 1/4 Zoll (6,3 mm) Sechskant sein, der in einen üblichen Schnellsteckverbinder passt.

Die Entgratungsvorrichtung 1 weist ein erstes Ende 3 und ein zweites Ende 4 auf. Der Grundkörper 2 weist eine Aussparung als Aufnahme 5 auf. In einer Richtung von dem zweiten Ende 4 zu dem ersten Ende 3 hin ist in der Aufnahme 5 zuerst ein konischer und kegelförmiger Entgratungsabschnitt 6, dann ein ebenfalls konischer und kegelförmiger Führungsabschnitt 7 und schließlich ein abgerundeter Einführabschnitt 8 ausgebildet.

Ein Öffnungswinkel α zwischen zwei Schenkeln des Entgratungsabschnitt 6 bzw. eines fiktiven Kegels an dem Entgratungsabschnitt beträgt 70° und ein Neigungswinkel β zwischen dem Führungsabschnitt 7 und der Rotationsachse 11 beträgt 7°. Der Öffnungswinkel α des Entgratungsabschnittes ist somit wesentlich größer als der Neigungswinkel β des Führungsabschnittes 7, insbesondere ist der Öffnungswinkel α wenigstens um das 2-, 3-, 5-, 7-oder 10-Fache größer als der Neigungswinkel β.

Der abgerundete Einführabschnitt 8 und der Führungsabschnitt 7 ermöglichen ein problemloses Einführen des stangenförmigen Elements 12 in die Aufnahme 5 auch bei Abweichungen der Längsachse des stangenförmigen Elementes 12 von der Rotationsachse 11 der Entgratungsvorrichtung 1. Beim Einführen des stangenförmigen Elementes 12 wird dieses Element 12 von dem Führungsabschnitt 7 geführt, bis das stangenförmige Element 12 in Kontakt mit dem Entgratungsabschnitt 6 gelangt. An dem Entgratungsabschnitt 6 wird das stangenförmige Element 12 entgratet, d. h. ein Grat, der beim Abschneiden des stangenförmigen Elementes 12 auf eine vorgegebene Länge entsteht, wird entfernt. Die konische Ausbildung des Führungsabschnittes 7 ermöglicht es, dass das stangenförmige Element 12 während des Entgratens eine taumelnde Bewegung bzw. eine von einem Kegel begrenzte Rotation ausführt, auch wenn der Durchmesser des stangenförmigen Elementes 12 im Wesentlichen dem maximalen Durchmesser des Entgratungsabschnittes 6, d. h. dem Durchmesser des Entgratungsabschnittes 6 am Übergang zum Führungsabschnitt 7, entspricht. Die taumelnde Bewegung des stangenförmigen Elements 12 ist dabei von dem Führungsabschnitt 7 begrenzt. Die taumelnde Bewegung kann in vorteilhafter Weise zu verbesserten Abtragungsergebnissen führen.

Aufgrund der abgerundeten Ausbildung des Einführabschnittes 8 und der konischen Ausbildung des Führungsabschnittes 7 wird das Gewinde des stangenförmigen Elementes 12 bei der taumelnden Rotation geschont. Aufgrund des großen Öffnungswinkels α des Entgratungsabschnittes 6 wird das Gewinde des stangenförmigen Elementes 12 auch stirnseitig geschont und die Abtragung des Grates erfolgt im Wesentlichen nur in axialer Richtung des stangenförmigen Elementes 12.

Insgesamt betrachtet sind mit der erfindungsgemäßen Entgratungsvorrichtung 1 und dem erfindungsgemäßen Verfahren wesentliche Vorteile verbunden. Die Ausbildung des Führungsabschnittes 7, konisch mit dem Neigungswinkel β, ermöglicht eine taumelnde Bewegung des stangenförmigen Elementes 12 auch bei einem großen Durchmesser des stangenförmigen Elementes 12 und aufgrund des abgerundeten Einführabschnittes 8 kann nicht nur das Einführen des stangenförmigen Elementes in die Aufnahme 5 erleichtert werden, sondern Beschädigungen an der radialen Außenseite des stangenförmigen Elementes 12 während des Entgratens, insbesondere bei einem Gewinde an einer Gewindestange als stangenförmiges Element 12, tritt im Wesentlichen nicht auf.

## Patentansprüche

1. Entgratungsvorrichtung (1) zur Bearbeitung eines Endes eines stangenförmigen Elementes (12), mit einer Rotationsachse (11) und mit einem Grundkörper (2) mit einem ersten Ende (3) und einem dem ersten Ende (3) gegenüberliegenden zweiten Ende (4), wobei an dem ersten Ende (3) des Grundkörpers (2) eine Aufnahme (5) für das stangenförmige Element (12) ausgebildet ist, wobei die Aufnahme (5) einen Entgratungsabschnitt (6) aufweist, und wobei zwischen dem Entgratungsabschnitt (6) und dem ersten Ende (3) an der Aufnahme (5) ein konisch ausgebildeter Führungsabschnitt (7) ausgebildet ist, **dadurch gekennzeichnet, dass**
an dem ersten Ende (3) ein in den Führungsabschnitt (7) mündender abgerundeter Einführabschnitt (8) ausgebildet ist und/oder
das erste Ende (3) des Grundkörpers (2) in einem Schnitt parallel zu der Rotationsachse (11) konvex ausgebildet ist.

2. Entgratungsvorrichtung nach Anspruch 1,
**dadurch gekennzeichnet, dass**
der Durchmesser des Führungsabschnittes (7), insbesondere stetig, in Richtung von dem zweiten Ende (4) zu dem ersten Ende (3) zunimmt.

3. Entgratungsvorrichtung nach Anspruch 1 oder 2,
**dadurch gekennzeichnet, dass**
ein Neigungswinkel (β) zwischen dem Führungsabschnitt (7) und der Rotationsachse (11) zwischen 1° und 30°, vorzugsweise zwischen 3° und 20°, insbesondere zwischen 5° und 10° liegt.

4. Entgratungsvorrichtung nach einem oder mehreren der vorhergehenden Ansprüche,
**dadurch gekennzeichnet, dass**
der Entgratungsabschnitt (6) konisch, insbesondere kegelförmig, ausgebildet ist.

5. Entgratungsvorrichtung nach einem oder mehreren der vorhergehenden Ansprüche,
**dadurch gekennzeichnet, dass**
ein Öffnungswinkel zwischen zwei Schenkeln des Entgratungsabschnittes (6) zwischen 10° und 90°, vorzugsweise zwischen 30° und 85°, insbesondere zwischen 60° und 80° liegt.

6. Entgratungsvorrichtung nach einem oder mehreren der vorhergehenden Ansprüche,
**dadurch gekennzeichnet, dass**
dass der Führungsabschnitt (7) kegelförmig ausgebildet ist.

7. Entgratungsvorrichtung nach einem oder mehreren der vorhergehenden Ansprüche,
**dadurch gekennzeichnet, dass**
die Entgratungsvorrichtung (1) eine Halteeinrichtung (9),
vorzugsweise zur Befestigung an einer Bohrmaschine oder einem Elektroschrauber, umfasst und die Halteeinrichtung (9) insbesondere als ein Mehrkant (10) ausgebildet ist
und/oder
die Oberfläche des Entgratungsabschnitts (6) mit Metallkörnern versehen ist.

8. Verfahren zum Entgraten eines stangenförmigen Elementes (12) mit einer Entgratungsvorrichtung (1) mit den Schritten:
- Rotieren der Entgratungsvorrichtung (1) um eine Rotationsachse (11),
- Einführen des stangenförmigen Elementes (12) in eine Aufnahme (5) der Entgratungsvorrichtung (1),
- Kontaktieren eines Endes des stangenförmigen Elementes (12) mit einem Entgratungsabschnitt (6) an der Aufnahme (5), so dass das stangenförmigen Element (12) entgratet wird und/oder eine Fase eingearbeitet wird,
**dadurch gekennzeichnet, dass**
von dem stangenförmigen Element (12) während des Entgratens eine taumelnde Bewegung ausgeführt wird, welche von einem Führungsabschnitt (7) der Entgratungsvorrichtung (1) begrenzt wird.

9. Verfahren nach Anspruch 8,
**dadurch gekennzeichnet, dass**
der Durchmesser des stangenförmigen Elementes (12), insbesondere an dem in die Aufnahme (5) eingeführten Ende, dem maximalen Durchmesser des Entgratungsabschnittes (6) entspricht oder der Durchmesser des stangenförmigen Elementes (12), insbesondere an dem in die Aufnahme (5) eingeführten Ende, um weniger als 20%, 10%, 5% oder 2% kleiner ist als der maximale Durchmesser des Entgratungsabschnittes (6).

10. Verfahren nach Anspruch 8 oder 9,
**dadurch gekennzeichnet, dass**
die taumelnde Bewegung sich innerhalb eines fiktiven Kegels mit einem Öffnungswinkel zwischen 2° und 60°, vorzugsweise zwischen 6° und 40°, insbesondere zwischen 10° und 20°, bewegt.

## Claims

1. Deburring device (1) for working on the end of a bar-shaped element (12), comprising an axis of rotation (11) and a body (2) with a first end (3) and a second end (4) opposite the first end (3), a receptacle (5) for the bar-shaped element (12) being provided at the first end (3) of the body (2), the receptacle (5) having a deburring portion (6), and a tapered guide portion (7) being provided on the receptacle (5) between the deburring portion (6) and the first end (3),
**characterised in that**
a rounded insertion portion (8) joining the guide portion (7) is provided at the first end (3)
and/or
the first end (3) of the body (2) is convex in a section parallel to the axis of rotation (11).

2. Deburring device according to claim 1,
**characterised in that**
the diameter of the guide portion (7) increases, in particularly continuously, from the second end (4) to the first end (3).

3. Deburring device according to claim 1 or claim 2,
**characterised in that**
the angle of inclination (β) between the guide portion (7) and the axis of rotation (11) is between 1° and 30°, preferably between 3° and 20°, in particular between 5° and 10°.

4. Deburring device according to one or more of the preceding claims,
**characterised in that**
the deburring portion (6) is tapered, in particular conical.

5. Deburring device according to one or more of the preceding claims,
**characterised in that**
the included angle between two sides of the deburring portion (6) is between 10° and 90°, preferably between 30° and 85°, in particular between 60° and 80°.

6. Deburring device according to one or more of the preceding claims,
**characterised in that**
the guide portion (7) is conical.

7. Deburring device according to one or more of the preceding claims, **characterised in that**
the deburring device (1) includes a retaining means (9), preferably for fastening to a power drill or an electric screwdriver, and the retaining means (9) is designed, in particular, as a polygonal element (10)
and/or
the surface of the deburring portion (6) is provided with metal grains.

8. Method of deburring a bar-shaped element (12) with a deburring device (1), comprising the steps:
- rotating the deburring device (1) about an axis of rotation (11),
- inserting the bar-shaped element (12) into a receptacle (5) of the deburring device (1),
- contacting one end of the bar-shaped element (12) with a deburring portion (6) on the receptacle (5) so that the bar-shaped element (12) is deburred and/or a chamfer is incorporated,
**characterised in that**
a tumbling movement is executed by the bar-shaped element (12) during the deburring operation, this movement being delimited by a guide portion (7) of the deburring device (1).

9. Method according to claim 8,
**characterised in that**
the diameter of the bar-shaped element (12), in particular at the end inserted into the receptacle (5), corresponds to the maximum diameter of the deburring portion (6) or the diameter of the bar-shaped element (12), in particular at the end inserted into the receptacle (5), is less than 20 %, 10 %, 5 % or 2 % smaller than the maximum diameter of the deburring portion (6).

10. Method according to claim 8 or claim 9,
**characterised in that**
the tumbling movement moves within an imaginary cone with an included angle of between 2° and 60°, preferably between 6° and 40°, in particular between 10° and 20°.

## Revendications

1. Dispositif d'ébavurage (1) destiné à usiner une extrémité d'un élément en forme de tige (12), comportant un axe de rotation (11) et un corps principal (2) ayant une première extrémité (3) et une seconde extrémité (4) opposée à la première extrémité (3), dans lequel un logement (5) pour l'élément en forme de tige (12) est formé sur la première extrémité (3) du corps principal (2), dans lequel le logement (5) comporte une partie d'ébavurage (6), et dans lequel une partie de guidage de forme conique (7) est formée entre la partie d'ébavurage (6) et la première extrémité (3) sur le logement (5), **caractérisé en ce que**
une partie d'insertion arrondie (8) débouchant dans la partie de guidage (7) est formée sur la première extrémité (3)
et/ou
la première extrémité (3) du corps principal (2) est formée de manière convexe dans une section parallèle à l'axe de rotation (11).

2. Dispositif d'ébavurage selon la revendication 1,
**caractérisé en ce que**
le diamètre de la partie de guidage (7) augmente, en particulier de manière continue, dans la direction de la seconde extrémité (4) vers la première extrémité (3).

3. Dispositif d'ébavurage selon la revendication 1 ou 2,
**caractérisé en ce que**
un angle d'inclinaison (β) entre la partie de guidage (7) et l'axe de rotation (11) est compris entre 1° et 30°, de préférence entre 3° et 20°, en particulier entre 5° et 10°.

4. Dispositif d'ébavurage selon une ou plusieurs des revendications précédentes,
**caractérisé en ce que**
la partie d'ébavurage (6) est formée de manière conique, en particulier de manière conique.

5. Dispositif d'ébavurage selon une ou plusieurs des revendications précédentes,
**caractérisé en ce que**
un angle d'ouverture entre deux branches de la partie d'ébavurage (6) est compris entre 10° et 90°, de préférence entre 30° et 85°, en particulier entre 60° et 80°.

6. Dispositif d'ébavurage selon une ou plusieurs des revendications précédentes,
**caractérisé en ce que**
la partie de guidage (7) est formée de manière conique.

7. Dispositif d'ébavurage selon une ou plusieurs des revendications précédentes,
**caractérisé en ce que**
le dispositif d'ébavurage (1) inclut un dispositif de retenue (9), de préférence pour être fixé sur une perceuse ou une visseuse électrique, et le dispositif de retenue (9) est en particulier formé comme un polygone (10)
et/ou
la surface de la partie d'ébavurage (6) est munie de grains de métal.

8. Procédé pour ébavurer un élément en forme de tige (12) avec un dispositif d'ébavurage (1), comportant les étapes consistant à :
- faire tourner le dispositif d'ébavurage (1) autour d'un axe de rotation (11),
- introduire l'élément en forme de tige (12) dans un logement (5) du dispositif d'ébavurage (1),
- mettre en contact une extrémité de l'élément en forme de tige (12) avec une partie d'ébavurage (6) sur le logement (5), de telle sorte que l'élément en forme de tige (12) est ébavuré et/ou qu'un chanfrein est usiné,
**caractérisé en ce que**
un mouvement de bascule est exécuté par l'élément en forme de tige (12) pendant l'ébavurage, lequel mouvement est limité par une partie de guidage (7) du dispositif d'ébavurage (1).

9. Procédé selon la revendication 8,
**caractérisé en ce que**
le diamètre de l'élément en forme de tige (12), en particulier sur l'extrémité introduite dans le logement (5), correspond au diamètre maximal de la partie d'ébavurage (6), ou le diamètre de l'élément en forme de tige (12), en particulier sur l'extrémité insérée dans le logement (5), est inférieur de moins de 20 %, 10 %, 5 % ou 2 % au diamètre maximal de la partie d'ébavurage (6).

10. Procédé selon la revendication 8 ou 9,
**caractérisé en ce que**
le mouvement de bascule se déplace à l'intérieur d'un cône fictif avec un angle d'ouverture compris entre 2° et 60°, de préférence entre 6° et 40°, en particulier entre 10° et 20°.
